# EUROPEAN PATENT APPLICATION

(11) **EP 4 273 789 A1**
(43) Date of publication of application: **08.11.2023**
(21) Application number: 21925447.1
(22) Date of filing: 11.11.2021
(51) Int. Cl.: G06Q 50/30, H04W 4/44, G06Q 20/16

(54) **V2X-BASED VEHICLE PAYMENT METHODAND DEVICE**

(30) Priority: 09.02.2021 CN 202110181935
(71) Applicant: Huawei Technologies Co., Ltd., Shenzhen, Guangdong 518129 (CN)
(72) Inventor: SUI, Linlin, Shenzhen, Guangdong 518129 (CN); YANG, Miao, Shenzhen, Guangdong 518129 (CN)
(74) Representative: Gill Jennings & Every LLP
(86) International application number: PCT/CN2021/130148
(87) International publication number: WO 2022/170800

(57) **Abstract**

This application discloses a V2X-based vehicle payment method and device. The method is performed by a service request terminal (43), and the method includes: receiving, based on a PC5 interface, service information that is broadcast by a service providing terminal (42), where the service information is related to a service that can be provided by the service providing terminal (42); sending a service request for a first service to the service providing terminal (42) based on the PC5 interface, where the service request includes payment account information of the service request terminal (43), and the first service is at least some of services that can be provided by the service providing terminal (42); and receiving payment completion information from a payment organization terminal (41) based on a Uu interface. According to the method, vehicle payment can be completed more conveniently.

## Description

This application claims priority to Chinese Patent Application No. 202110181935.4, filed with the China National Intellectual Property Administration on February 9, 2021 and entitled "V2X-BASED VEHICLE PAYMENT METHOD AND DEVICE", which is incorporated herein by reference in its entirety.

### TECHNICAL FIELD

This application relates to the field of intelligent driving technologies, and in particular, to a V2X-based vehicle payment method and device.

### BACKGROUND

Nowadays, drivers or passengers usually use third parties to pay for vehicle-related consumption. For example, a driver may use a payment application on a mobile phone to pay fees such as a car washing fee, a parking fee, and a refueling fee. However, this manner cannot cover various application scenarios of vehicles. For example, a driver is not on a vehicle (such as a self-driving vehicle), or a driver is driving a vehicle and manual payment is inconvenient, or there is no mobile phone for payment in a vehicle. Therefore, a related technology requires a vehicle payment method that is more widely applicable.

### SUMMARY

In view of this, a V2X-based vehicle payment method and device are proposed, so that vehicle payment can be completed more conveniently.

In a related technology, a vehicle payment system needs to use a specific device (for example, an OBU), and a communication distance is short. The foregoing technical solution can be implemented only when a vehicle enters an executable communication area. This may cause traffic congestion. In all related technologies using a third-party payment application, payment can be executed only after a service providing terminal or a service request terminal performs a payment action (for example, scanning a QR code). This causes difficulty for a person on a vehicle, especially a vehicle driver. In addition, in the foregoing manners, a distance between a service providing terminal and a service request terminal needs to be a visible distance; otherwise, a QR code scanning operation cannot be performed. This is also inconvenient for a person on a vehicle.

According to a first aspect, an embodiment of this application provides a V2X-based vehicle payment method. The method is performed by a service request terminal, and the method includes: receiving, based on a PC5 interface, service information that is broadcast by a service providing terminal, where the service information is related to a service that can be provided by the service providing terminal; sending a service request for a first service to the service providing terminal based on the PC5 interface, where the service request includes payment account information of the service request terminal, and the first service is at least some of services that can be provided by the service providing terminal; and receiving payment completion information from a payment organization terminal based on a Uu interface.

According to the method, a plurality of communication manners, especially that based on the PC5 interface between the service providing terminal and the service request terminal and that based on the Uu interface between the service providing terminal and the payment organization terminal, may be used in a payment process. In this way, a communication time can be shortened, and a communication manner in the internet of vehicles field is cleverly applied. Further, a payment procedure of the vehicle payment method does not require a manual operation of a person on a vehicle or service personnel, and does not impose a limitation on a distance between a person on a vehicle and service personnel. This is convenient and secure.

In a possible design, before the sending a service request for a first service, the method further includes: sending a payment account request to the payment organization based on the Uu interface; and receiving the payment account information from the payment organization terminal based on the Uu interface.

Because a distance between the service request terminal and the payment organization terminal is comparatively long (remote communication), the service request terminal may send the payment account request to the payment organization based on the Uu interface, and receive the payment account information of the service request terminal based on the Uu interface.

In a possible design, the payment account information is a terminal identifier of the service request terminal, and the terminal identifier is bound to a payment account of the service request terminal.

To facilitate quick payment, the service request terminal may bind the terminal identifier of the service request terminal to the payment account, thereby omitting a step of requesting the payment account.

In a possible design, before the sending a service request for a first service, the method further includes: receiving, from the service providing terminal based on the PC5 interface, bill information of accepting the first service by the service request terminal; and determining, based on the bill information, that the first service meets a preset service limitation condition.

In this manner, a service request user may customize the service limitation condition based on a personal preference, and the service request terminal automatically selects the first service that meets the service limitation condition, so as to determine the first service suitable for the service request user, thereby improving user experience.

According to a second aspect, an embodiment of this application provides a V2X-based vehicle payment method. The method is performed by a service providing terminal, and includes: broadcasting, based on a PC5 interface, service information that can be provided by the service providing terminal, where the service information is related to a service that can be provided by the service providing terminal; receiving a service request for a first service from a service request terminal based on the PC5 interface, where the service request includes payment account information of the service request terminal, and the first service is at least some of services that can be provided by the service providing terminal; sending, to a payment organization terminal based on a Uu interface, a payment request about paying for the first service by the service request terminal, where the payment request includes bill information of the first service and the payment account information of the service request terminal; and receiving, from the payment organization terminal based on the Uu interface, payment completion information indicating that the service request terminal has paid for the first service.

According to the method, a plurality of communication manners, especially that based on the PC5 interface between the service providing terminal and the service request terminal and that based on the Uu interface between the service providing terminal and the payment organization terminal, may be used in a payment process. In this way, a communication time can be shortened, and a communication manner in the internet of vehicles field is cleverly applied. Further, a payment procedure of the vehicle payment method does not require a manual operation of a person on a vehicle or service personnel, and does not impose a limitation on a distance between a person on a vehicle and service personnel. This is convenient and secure. When the payment account information of the service request terminal is obtained, the service providing terminal may send the payment request to the payment organization terminal, so that the payment organization terminal can complete a payment operation based on the payment account information of the service request terminal and payment account information of the service providing terminal.

In a possible design, after the receiving payment completion information, the method further includes: feeding back, to the service request terminal based on the PC5 interface, completion of payment made by the service request terminal for the first service.

In implementation, because a distance between the service providing terminal and the service request terminal is comparatively short, the service providing terminal may send the payment completion information to the service request terminal based on PC5 after receiving a payment completion operation from the payment organization terminal, so that both the service providing terminal and the service request terminal are notified that payment is completed.

According to a third aspect, an embodiment of this application provides a V2X-based vehicle payment method. The method is performed by a service request terminal, and includes: receiving, based on a PC5 interface, service information that is broadcast by a service providing terminal, where the service information is related to a service that can be provided by the service providing terminal; sending a service request for a first service to the service providing terminal based on the PC5 interface, where the first service is at least some of services that can be provided by the service providing terminal; receiving, from the service providing terminal based on the PC5 interface, payment account information of the service providing terminal and bill information of accepting the first service by the service request terminal; and sending a payment request to a payment organization terminal based on a Uu interface, where the payment request includes the payment account information of the service providing terminal and the bill information.

According to the method, a plurality of communication manners, especially that based on the PC5 interface between the service providing terminal and the service request terminal and that based on the Uu interface between the service providing terminal and the payment organization terminal, may be used in a payment process. In this way, a communication time can be shortened, and a communication manner in the internet of vehicles field is cleverly applied. Further, a payment procedure of the vehicle payment method does not require a manual operation of a person on a vehicle or service personnel, and does not impose a limitation on a distance between a person on a vehicle and service personnel. This is convenient and secure. The service request terminal may send different requests to different subjects (the service providing terminal or the payment organization terminal) in different communication manners.

In a possible design, after the step of sending the payment request, the method further includes: receiving, from the payment organization terminal based on the Uu interface, payment completion information indicating that the service request terminal has paid for the first service.

In this method, because a distance between the service request terminal and the payment organization terminal is comparatively long (remote communication), the service request terminal may receive the payment completion information from the payment organization terminal based on the Uu interface.

According to a fourth aspect, an embodiment of this application provides a V2X-based vehicle payment method. The method is performed by a service providing terminal, and includes: broadcasting, based on a PC5 interface, service information that can be provided by the service providing terminal, where the service information is related to a service that can be provided by the service providing terminal; receiving a service request for a first service from a service request terminal based on the PC5 interface, where the first service is at least some of services that can be provided by the service providing terminal; sending, to the service request terminal based on the PC5 interface, payment account information of the service providing terminal and information indicating that the service request terminal accepts the first service; and receiving, from a payment organization terminal based on a Uu interface, payment completion information indicating that the service request terminal has paid for the first service.

According to the method, a plurality of communication manners, especially that based on the PC5 interface between the service providing terminal and the service request terminal and that based on the Uu interface between the service providing terminal and the payment organization terminal, may be used in a payment process. In this way, a communication time can be shortened, and a communication manner in the internet of vehicles field is cleverly applied. Further, a payment procedure of the vehicle payment method does not require a manual operation of a person on a vehicle or service personnel, and does not impose a limitation on a distance between a person on a vehicle and service personnel. This is convenient and secure. When the payment account information of the service providing terminal is obtained, the service providing terminal may send the bill information and the payment account information to the service request terminal, so that the service request terminal can send a payment request to the payment organization terminal by using these pieces of information.

In a possible design, after the step of receiving, from the payment organization terminal based on the Uu interface, the payment completion information indicating that the service request terminal has paid for the first service, the method further includes: sending the payment completion information to the service request terminal based on the PC5 interface.

In implementation, because a distance between the service providing terminal and the service request terminal is comparatively short, the service providing terminal may send the payment completion information to the service request terminal based on PC5 after receiving a payment completion operation from the payment organization terminal, so that both the service providing terminal and the service request terminal are notified that payment is completed.

According to a fifth aspect, an embodiment of this application provides a V2X-based vehicle payment device, including: a first receiving module, configured to receive, based on a PC5 interface, service information that is broadcast by a service providing terminal, where the service information is related to a service that can be provided by the service providing terminal; a first sending module, configured to send a service request for a first service to the service providing terminal based on the PC5 interface, where the service request includes payment account information of the service request terminal, and the first service is at least some of services that can be provided by the service providing terminal; and a second receiving module, configured to receive payment completion information from a payment organization terminal based on a Uu interface.

In a possible design, the device further includes: a second sending module, configured to send a payment account request to the payment organization based on the Uu interface; and a third receiving module, configured to receive the payment account information from the payment organization terminal based on the Uu interface.

In a possible design, the payment account information is a terminal identifier of the service request terminal, and the terminal identifier is bound to a payment account of the service request terminal.

In a possible design, the device further includes: a fourth receiving module, configured to receive, from the service providing terminal based on the PC5 interface, bill information of accepting the first service by the service request terminal; and a first determining module, configured to determine that the first service meets a preset service limitation condition.

According to a sixth aspect, an embodiment of this application provides a V2X-based vehicle payment device, including: a broadcast module, configured to broadcast, based on a PC5 interface, service information that can be provided by the service providing terminal, where the service information is related to a service that can be provided by the service providing terminal; a first receiving module, configured to receive a service request for a first service from a service request terminal based on the PC5 interface, where the service request includes payment account information of the service request terminal, and the first service is at least some of services that can be provided by the service providing terminal; a first sending module, configured to send, to a payment organization terminal based on a Uu interface, a payment request about paying for the first service by the service request terminal, where the payment request includes bill information of the first service and the payment account information of the service request terminal; and a second receiving module, configured to receive, from the payment organization terminal based on the Uu interface, payment completion information indicating that the service request terminal has paid for the first service.

In a possible design, the device further includes: a second sending module, configured to send the payment completion information to the service request terminal based on the PC5 interface.

According to a seventh aspect, an embodiment of this application provides a V2X-based vehicle payment device, including: a first receiving module, configured to receive, based on a PC5 interface, service information that is broadcast by a service providing terminal, where the service information is related to a service that can be provided by the service providing terminal; a first sending module, configured to send a service request for a first service to the service providing terminal based on the PC5 interface, where the first service is at least some of services that can be provided by the service providing terminal; a second receiving module, configured to receive, from the service providing terminal based on the PC5 interface, payment account information of the service providing terminal and bill information of accepting the first service by the service request terminal; and a second sending module, configured to send a payment request to a payment organization terminal based on a Uu interface, where the payment request includes the payment account information of the service providing terminal and the bill information of accepting the first service by the service request terminal.

In a possible design, the device further includes: a third receiving module, configured to receive, from the payment organization terminal based on the Uu interface, payment completion information indicating that the service request terminal has paid for the first service.

According to an eighth aspect, an embodiment of this application provides a V2X-based vehicle payment device, including: a broadcast module, configured to broadcast, based on a PC5 interface, service information that can be provided by the service providing terminal, where the service information is related to a service that can be provided by the service providing terminal; a first receiving module, configured to receive a service request for a first service from a service request terminal based on the PC5 interface, where the first service is at least some of services that can be provided by the service providing terminal; a first sending module, configured to send, to the service request terminal based on the PC5 interface, payment account information of the service providing terminal and information indicating that the service request terminal accepts the first service; and a second receiving module, configured to receive, from a payment organization terminal based on a Uu interface, payment completion information indicating that the service request terminal has paid for the first service.

In a possible design, the device further includes: a second sending module, configured to feed back, to the service request terminal based on the PC5 interface, completion of payment made by the service request terminal for the first service.

According to a ninth aspect, an embodiment of this application provides an electronic terminal, including: a processor; and a memory, configured to store processor-executable instructions, where the processor is configured to implement the method in any possible design of the first aspect, the second aspect, the third aspect, or the fourth aspect when executing the instructions.

According to a tenth aspect, an embodiment of this application provides a nonvolatile computer-readable storage medium. The nonvolatile computer-readable storage medium stores computer program instructions. When the computer program instructions are executed by a processor, the method in any possible design of the first aspect, the second aspect, the third aspect, or the fourth aspect is implemented.

According to an eleventh aspect, an embodiment of this application provides a computer program product, including instructions. When the instructions are run on a computer, the computer is enabled to perform the method in any possible design of the first aspect, the second aspect, the third aspect, or the fourth aspect.

These and other aspects of this application are clearer and more luminous in descriptions of the following (plurality of) embodiments.

### BRIEF DESCRIPTION OF DRAWINGS

The accompanying drawings included in the specification and constituting a part of the specification, together with the specification, show example embodiments, features, and aspects of this application, and are intended to explain principles of this application.
FIG. 1 is a diagram of an application scenario of vehicle payment according to an embodiment of this application;
FIG. 2 is a diagram of a communication scenario of a vehicle payment system according to an embodiment of this application;
FIG. 3 is a schematic diagram of a vehicle payment device performing vehicle payment according to an embodiment of this application;
FIG. 4 is a schematic diagram of performing vehicle payment by a vehicle payment system according to an embodiment of this application;
FIG. 5 is a schematic diagram of performing vehicle payment by a vehicle payment system according to another embodiment of this application;
FIG. 6 is a schematic diagram of performing vehicle payment by a vehicle payment system according to another embodiment of this application;
FIG. 7 is a block diagram of a vehicle payment device according to another embodiment of this application;
FIG. 8 is a block diagram of a vehicle payment device according to another embodiment of this application;
FIG. 9 is a block diagram of a vehicle payment device according to another embodiment of this application; and
FIG. 10 is a block diagram of a vehicle payment device according to another embodiment of this application.

### DESCRIPTION OF EMBODIMENTS

The following describes various example embodiments, features, and aspects of this application in detail with reference to the accompanying drawings. Same reference signs in the accompanying drawings represent elements that have same or similar functions. Although various aspects of embodiments are shown in the accompanying drawings, the accompanying drawings do not need to be drawn to scale, unless otherwise specified.

In the embodiments of this application, "/" may represent an "or" relationship between associated objects, for example, A/B may represent A or B; and "and/or" may be used to indicate that there are three relationships between associated objects, for example, A and/or B may represent the following three cases: only A exists, both A and B exist, and only B exists, where A and B each may be singular or plural. For ease of describing the technical solutions in the embodiments of this application, words such as "first" and "second" in the embodiments of this application may be used to distinguish between technical features that have same or similar functions. The words such as "first" and "second" do not limit a quantity or an execution sequence, and the words such as "first" and "second" do not necessarily indicate a difference. In the embodiments of this application, the expression such as "example" or "for example" is used to represent an example, an illustration, or a description. Any embodiment or design scheme described as "example" or "for example" shall not be interpreted as being more preferred or advantageous than other embodiments or design schemes. The expression such as "example" or "for example" is intended to present a related concept in a specific manner for ease of understanding.

In addition, to better describe this application, numerous specific details are given in the following specific implementations. A person skilled in the art should understand that this application can also be implemented without some specific details. In some embodiments, methods, approaches, elements, and circuits well known to a person skilled in the art are not described in detail, to highlight a purport of this application.

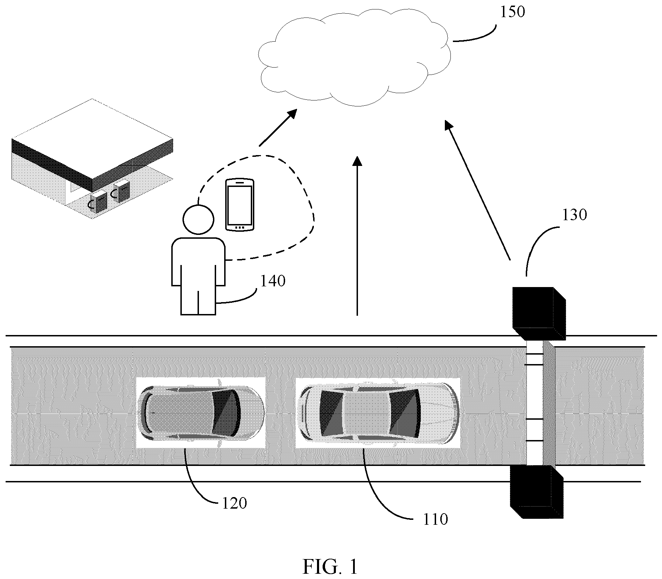

To better describe the technical solutions of this application, the following describes a vehicle payment scenario with reference to FIG. 1. FIG. 1 is a diagram of an application scenario of vehicle payment according to an embodiment of this application.

A driver drives a vehicle 110. The vehicle 110 may perform vehicle to vehicle (vehicle to vehicle, V2V) communication with a vehicle 120, or the vehicle 110 may perform vehicle to infrastructure (Vehicle to Infrastructure, V2I) communication with a roadside infrastructure 130. In implementation, for capability of performing V2I with the roadside infrastructure 130, a roadside unit (Roadside Unit, RSU) may be embedded into the roadside infrastructure. Therefore, the roadside infrastructure 130 may be referred to as an RSU 130. Alternatively, the vehicle 110 performs vehicle to pedestrian (Vehicle to Pedestrian, V2P) communication with a pedestrian 140. In addition, the vehicle 110 may further perform vehicle to network (Vehicle to Network, V2N) communication with a communications network 150, to obtain road condition information or bill information in a timely manner. These communication manners may be collectively referred to as V2X communication (where X represents anything).

As shown in FIG. 1, after the driver pays a related fee of the vehicle 110, the RSU 130 may receive, from the communications network 150, an instruction permitting the vehicle 110 to pass, and open a gate of the RSU 130 to allow the vehicle 110 to travel after passing through the RSU 130.

In conventional technologies, payment can be executed only after a service providing terminal or a service request terminal performs a payment action (for example, scanning a QR code). This causes inconvenience for a person on a vehicle, especially a vehicle driver. In addition, in the foregoing manners, a distance between a service providing terminal and a service request terminal needs to be a visible distance; otherwise, a QR code scanning operation cannot be performed. This is also inconvenient for a person on a vehicle.

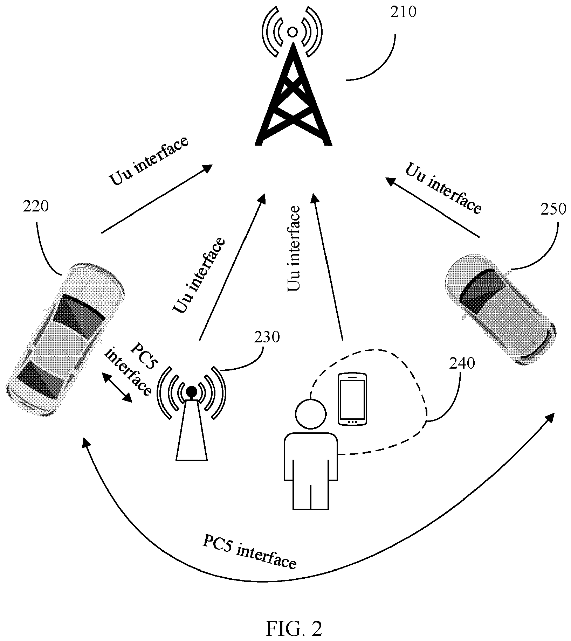

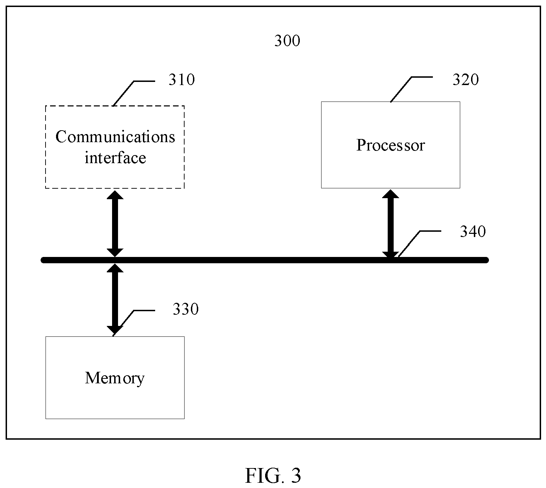

Based on this, the embodiments of this application provide a V2X-based vehicle payment method. A payment procedure of the vehicle payment method does not require a manual operation of a person on a vehicle or service personnel, and does not impose a limitation on a distance between a person on a vehicle and service personnel. This is convenient and secure. To better understand an application scenario of this application, the following describes, with reference to FIG. 2 and FIG. 3, a communication scenario of a vehicle payment system according to an embodiment of this application and a vehicle payment device used for vehicle payment.

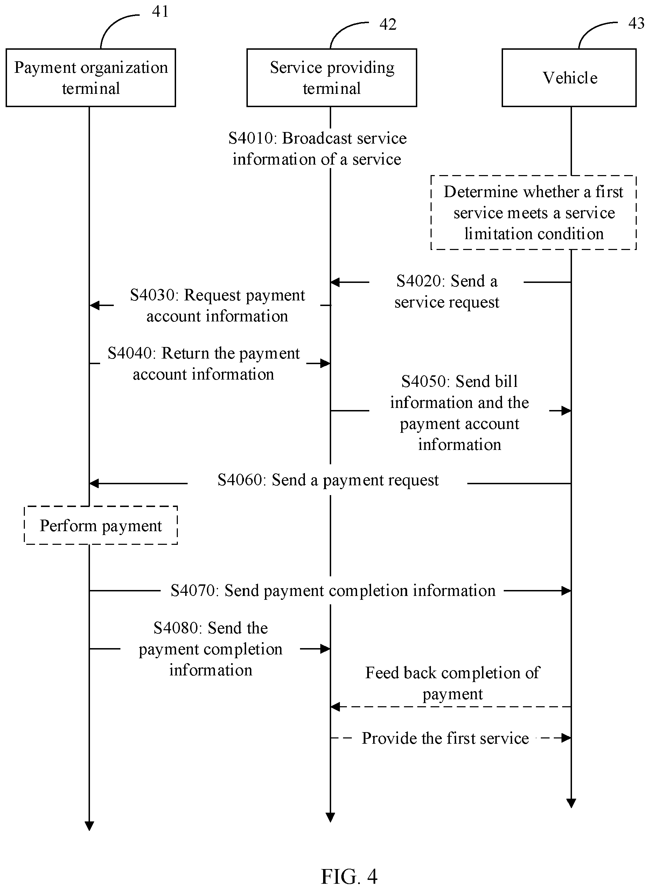

FIG. 2 is a diagram of a communication scenario of a vehicle payment system according to an embodiment of this application. As shown in FIG. 2, the communications system includes a base station 210 and various terminal devices 220 to 250. For ease of understanding, terminal devices 220 and 250 are vehicles, and a terminal device 240 is a mobile terminal (for example, a mobile phone) handheld by a user. In implementation, there may be more or fewer types of terminal devices and more or fewer terminal devices than those shown in FIG. 4. This is not limited in this application.

For example, the communications system is a V2X-based communications system. In the communications system, communication manners may be classified into a direct communication manner and a cellular communication manner based on different communications interfaces.

The cellular communication manner is a communication manner based on a Uu interface. In this communication manner, when two communication parties execute any instruction of communication, sending needs to be performed through a base station first, and then a subsequent node performs processing and forwarding. Therefore, the two communication parties cannot directly communicate in a dialog manner. As shown in FIG. 2, the vehicle 220 and the mobile terminal 240 may communicate in the cellular manner by using the base station 210.

The direct communication manner is a communication manner based on a PC5 interface. In this communication manner, a neighboring terminal is allowed to establish a direct link, so that data transmission of the terminal is not performed through relay of a base station any longer. In other words, in this communication manner, two communication parties may directly perform data transmission after transmitting signaling by using a base station. As shown in FIG. 4, when signaling is transmitted to each other by using the base station 210, the vehicle 220 and an RSU 230 directly perform data transmission with each other, and the vehicle 220 and the vehicle 250 directly perform data transmission with each other.

Corresponding to example embodiments of this application, the terminal devices in the vehicle payment system may use different communication manners based on payment requirements. For example, on a site on which payment is used (for example, a vehicle cleaning fee needs to be paid), because a distance between two parties is comparatively short, the two parties may use the direct communication manner (the communication manner based on the PC5 interface). For data transmission related to a payment organization terminal, remote transmission needs to be performed, and therefore, the cellular communication manner (the communication manner based on the Uu interface) may be used.

FIG. 3 is a schematic diagram of a vehicle payment device performing vehicle payment according to an embodiment of this application. The device may be the foregoing device, or may be an apparatus in the foregoing device. The apparatus may be a chip system. In this embodiment of this application, the chip system may include a chip, or may include a chip and another discrete component. The device 300 includes at least one processor 320, configured to implement a function of a vehicle payment device in the method provided in the embodiments of this application. For example, the processor 320 may generate payment information. For details, refer to detailed descriptions in method examples. Details are not described herein.

The device 300 may further include at least one memory 330, configured to store program instructions and/or data. The memory 330 is coupled to the processor 320. Couplings in the embodiments of this application are indirect couplings or communication connections between apparatuses, units, or modules, may be electrical, mechanical, or in another form, and are used for information exchange between the apparatuses, units, or modules. The processor 320 may cooperate with the memory 330 for an operation. The processor 320 may execute the program instructions stored in the memory 330. At least one of the at least one memory may be included in the processor.

The device 300 may further include a communications interface 310, configured to communicate with another device through a transmission medium, so that an apparatus used in the device 300 can communicate with the another device. For example, the communications interface 310 may be a PC5 interface for a direct communication manner or a Uu interface for a cellular communication manner. For example, the another device may be a terminal. The processor 320 receives and sends data by using the communications interface 310, and is configured to implement methods performed by the foregoing devices in embodiments corresponding to FIG. 4 to FIG. 6.

In this embodiment of this application, a specific connection medium between the communications interface 310, the processor 320, and the memory 330 is not limited. In this embodiment of this application, the memory 330, the processor 320, and the communications interface 310 are connected to each other by using a bus 340 in FIG. 3. The bus is represented by a bold line in FIG. 3. A connection manner between other components is merely an example for description, and is not intended for limitation. The bus may be classified into an address bus, a data bus, a control bus, and the like. For ease of representation, only one bold line is used to represent the bus in FIG. 3. However, this does not indicate that there is only one bus or one type of bus.

In this embodiment of this application, the processor may be a general purpose processor, a digital information processor, an application-specific integrated circuit, a field programmable gate array or another programmable logic device, a discrete gate or transistor logic device, or a discrete hardware component, and may implement or execute the methods, steps, and logical block diagrams disclosed in the embodiments of this application. The general purpose processor may be a microprocessor or any conventional processor or the like. The steps of the methods disclosed with reference to the embodiments of this application may be directly performed by a hardware processor, or may be performed by using a combination of hardware in the processor and a software module.

In this embodiment of this application, the memory may be a nonvolatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can be configured to carry or store expected program code in a form of an instruction or a data structure and that can be accessed by a computer, but is not limited thereto. The memory in this embodiment of this application may alternatively be a circuit or any other apparatus that can implement a storage function, and is configured to store the program instructions and/or data.

The following specifically describes, with reference to FIG. 4 to FIG. 6, a schematic diagram of performing vehicle payment by a vehicle payment system according to an embodiment of this application.

As shown in FIG. 4, the vehicle payment system may include a payment organization terminal 41, a service providing terminal 42, and a vehicle 43. The payment organization terminal 41 is a payment organization that has permission to perform an operation on an account of the service request terminal and/or the service providing terminal. For example, the payment organization terminal 41 may provide a corresponding account for the service request terminal 43 and/or the service providing terminal 42 based on identification information of the service request terminal 42 and/or the service providing terminal 43. The identification information may indicate identity information that uniquely identifies these terminals. For example, the payment organization terminal may allocate a corresponding account to a gas station based on a business license of the gas station. For another example, the payment organization terminal 41 may allocate, based on a driver's license provided by a driver, a corresponding account to a vehicle driven by the driver.

The payment organization terminal 41 may be a third-party payment application in which a payment account (for example, a bank account) has been pre-bound, or may be a background server of a payment account (for example, a background server of a bank). The terminal service providing terminal 42 is a merchant, for example, a gas station, a car wash, or a highway toll station, that provides a service for the service request terminal. The service request terminal 43 is a device that performs an operation of paying a vehicle-caused fee. In this application, the service request terminal 43 may be a vehicle, or may be a hardware device (for example, a chip) that can perform communication based on a PC5 interface and communication based on a Uu interface, or may be an apparatus that includes the hardware device.

As shown in FIG. 4, in step S4010, the service providing terminal 42 may periodically broadcast, based on the PC5 interface, service information provided by the service providing terminal, where the service information is related to a service that can be provided by the service providing terminal, and the service information includes but is not limited to provided service content and charging information, for example, a car washing service and 20 yuan per time. When there are a plurality of service providing terminals, and the service providing terminals provide different services, a same vehicle may receive service information of different services provided by different service providing terminals. For example, the same vehicle 43 may receive a highway passage service and a toll, a parking service and a parking fee, and a refueling service and a refueling fee.

In this case, because communication coverage of the PC5-based communication manner is very small, a service providing terminal may be determined based on a vehicle location. Specifically, because different service providing terminals 42 provide services in different areas, a service providing terminal 42 that provides a service for the vehicle 43 may be determined based on a parking location of the vehicle 43. For example, a service providing terminal that provides a refueling service and a service providing terminal that provides a parking service are respectively located in different areas, and a service providing terminal that provides a service for the vehicle may be determined based on a final parking location of the vehicle 43. In addition, at a same parking place, the vehicle 43 may further receive bill information sent by a plurality of service providing terminals. In this case, a person on the vehicle (for example, a driver or a passenger) may determine a service providing terminal by using an input device (for example, a touch display or a button) on the vehicle 43.

After determining the service providing terminal 42 in the foregoing manner, in step S4020, the vehicle 43 may send a service request for a first service to the service providing terminal 42 based on the PC5 interface.

In an optional embodiment, before sending the service request to the service providing terminal 42, the vehicle 43 may receive bill information that is about acceptance by the vehicle 43 and that is provided by the service providing terminal 42. The vehicle 43 may determine, based on the bill information, the first service to be accepted by the vehicle 43.

Specifically, the vehicle 43 may preset a service limitation condition. The service limitation condition may be an amount of money limited for each service, may be a provider limited for each service, or may be an upper payment limit limited for such a payment manner. For example, a vehicle user may limit a car washing amount to no more than 40 yuan for a car washing service, or a vehicle user uses the payment manner in the example embodiment of this application for only a service whose payment amount is less than 50 yuan, or a vehicle user may preset a selected refueling business brand. In implementation, the vehicle 43 may determine whether the service meets the service limitation condition, and the vehicle 43 exits a payment step or notifies the user if the service does not meet the service limitation condition, or may perform a subsequent step if the service meets the service limitation condition. In addition, the service limitation condition may alternatively be a selection manner preset by a vehicle user. For example, the service limitation condition may be a selection manner corresponding to a lowest price. For example, when a same car wash provides a plurality of car washing services, the service limitation condition may be a selection manner corresponding to a lowest car washing price. In this way, the vehicle can determine, based on the bill information, that the first service meets the preset service limitation condition.

In step S4020, the vehicle 43 may send the service request for the first service to the service providing terminal 42 based on the PC5 interface, where the service request may include a vehicle identifier used to identify the vehicle 43. In step S4030, after receiving the service request, the service providing terminal 42 requests payment account information from the payment organization terminal 43 based on the Uu interface. In implementation, the payment account information may be account information obtained after the service providing terminal 42 has been registered with the payment organization terminal 43.

After receiving the request, the payment organization terminal 43 determines the payment account information of the service providing terminal 42. In implementation, the payment organization terminal 43 may generate or search for, based on the identification information of the service providing terminal 42, the payment account information corresponding to the service providing terminal 42. In step S4040, the payment organization terminal 41 sends the payment account information to the service providing terminal 42.

In step S4050, the service providing terminal 42 may send, to the vehicle 43 based on the PC5 interface, the bill information of accepting the first service by the service request terminal and the payment account information of the service providing terminal 42.

After the vehicle 43 receives the bill information and the payment account information of the service providing terminal 42, in step S4060, the vehicle 430 sends, to the payment organization terminal 41 based on the Uu interface, a payment request of paying for the first service by the vehicle 43, where the payment request includes the bill information and the payment account information of the service providing terminal 42.

After receiving the payment request, the payment organization terminal 41 determines payment information of the payment based on the bill information. The payment information includes the payment account information of the service providing terminal 42, payment account information of the vehicle 43, and the bill information of the first service.

The payment organization terminal 41 completes a payment operation by using the payment information, that is, a payment account of the service providing terminal 42 accepts payment from a payment account of the vehicle 43.

After the payment is completed, in step S4070, the payment organization terminal 41 sends, to the vehicle 43 based on the Uu interface, payment completion information indicating that the vehicle 43 has paid for the first service.

In step S4080, the payment organization terminal 41 may further send the payment completion information to the service providing terminal 42 based on the Uu interface.

In addition, in an optional implementation, the vehicle 43 may further feed back, to the service providing terminal 42 based on the PC5 interface, completion of payment made by the vehicle 43 for the first service. After receiving the feedback from the vehicle 43, the service providing terminal 42 provides the first service for the vehicle 43.

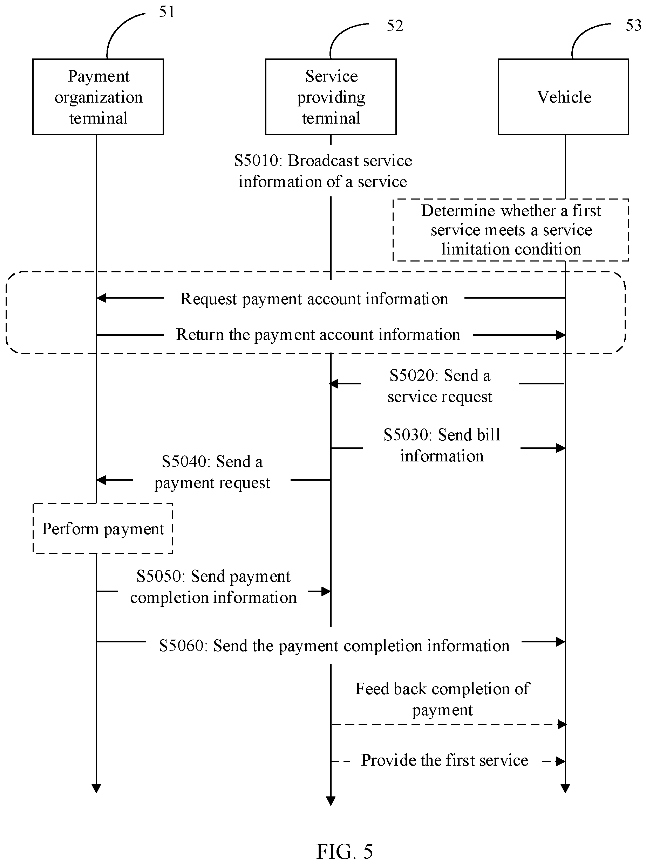

In addition, the vehicle payment system may alternatively use operations shown in FIG. 5. The vehicle payment system may include a payment organization terminal 51, a service providing terminal 52, and a vehicle 53.

The payment organization terminal 51 is a payment organization that has permission to perform an operation on an account of the service request terminal and/or the service providing terminal. For example, the payment organization terminal 51 may provide a corresponding account for the service request terminal and/or the service providing terminal based on identification information of the service request terminal 52 and/or the service providing terminal 53. The identification information may indicate identity information that uniquely identifies these terminals. For example, the payment organization terminal may allocate a corresponding account to a gas station based on a business license of the gas station. For another example, the payment organization terminal 51 may allocate, based on a driver's license provided by a driver, a corresponding account to a vehicle driven by the driver.

The payment organization terminal 51 may be a third-party payment application in which a payment account (for example, a bank account) has been pre-bound, or may be a background server (for example, a background server of a bank) of a payment account. The terminal service providing terminal 52 is a merchant, for example, a gas station, a car wash, or a highway toll station, that provides a service for the service request terminal. The service request terminal 53 is a device that performs an operation of paying a vehicle-caused fee. In this application, the service request terminal 53 may refer to a vehicle, or may refer to a hardware device (for example, a chip) that can perform communication based on a PC5 interface and communication based on a Uu interface, or an apparatus that includes the hardware device.

As shown in FIG. 5, in step S5010, the service providing terminal 52 may periodically broadcast, based on the PC5 interface, service information provided by the service providing terminal, where the service information is related to a service that can be provided by the service providing terminal, and the service information includes but is not limited to provided service content and charging information, for example, a car washing service and 20 yuan per time. When there are a plurality of service providing terminals, and each of the service providing terminals provides a different service, a same vehicle may receive service information of different services provided by different service providing terminals. For example, the same vehicle 53 may receive a highway passage service and a toll, a parking service and a parking fee, and a refueling service and a refueling fee.

In this case, because communication coverage of the PC5-based communication manner is very small, a service providing terminal may be determined based on a vehicle location. Specifically, because different service providing terminals 52 provide services in different areas, a service providing terminal 52 that provides a service for the vehicle 53 may be determined based on a parking location of the vehicle 53. For example, a service providing terminal that provides a refueling service and a service providing terminal that provides a parking service are respectively located in different areas, and a service providing terminal that provides a service for the vehicle may be determined based on a final parking location of the vehicle 53. In addition, at a same parking place, the vehicle 53 may further receive bill information sent by a plurality of service providing terminals. In this case, a person on the vehicle (for example, a driver or a passenger) may determine a service providing terminal by using an input device (for example, a touch display or a button) on the vehicle 53.

After determining the service providing terminal 52 in the foregoing manner, in step S5020, the vehicle 53 may send a service request for a service to the service providing terminal 52 based on the PC5 interface.

In an optional embodiment, before sending the service request to the service providing terminal 52, the vehicle 53 may receive bill information that is about acceptance by the vehicle 53 and that is provided by the service providing terminal 52. The vehicle 53 may determine the first service based on the bill information.

Specifically, the vehicle 53 may preset a service limitation condition. The service limitation condition may be an amount of money limited for each service, may be a provider limited for each service, or may be an upper payment limit limited for such a payment manner. For example, a vehicle user may limit a car washing amount to no more than 40 yuan for a car washing service, or a vehicle user uses the payment manner in the example embodiment of this application for only a service whose payment amount is less than 50 yuan, or a vehicle user may preset a selected refueling business brand. In implementation, the vehicle 53 may determine whether the service meets the service limitation condition, and the vehicle 53 exits a payment step or notifies the user if the service does not meet the service limitation condition, or may perform a subsequent step if the service meets the service limitation condition.

In addition, the service limitation condition may alternatively be a selection manner preset by a vehicle user. For example, the service limitation condition may be a selection manner corresponding to a lowest price. For example, when a same car wash provides a plurality of car washing services, the service limitation condition may be a selection manner corresponding to a lowest car washing price. In this way, the vehicle can determine, based on the service limitation condition and the bill information, a service that meets the service limitation condition.

The service request is sent to the service providing terminal 52 based on the PC5 interface, where the service request may include payment account information of the vehicle. Therefore, the vehicle 53 needs to determine a payment account corresponding to the vehicle 53. As shown in FIG. 5, the vehicle 53 requests the payment account information from the payment organization terminal 51 based on the Uu interface. In implementation, the vehicle 53 may send a vehicle identifier of the vehicle to the payment organization terminal 51 when requesting the payment account information from the payment organization terminal 51, and the payment organization terminal 51 may determine or generate the payment account information of the vehicle 53 by using the vehicle identifier. Then, the payment organization terminal 51 may send the payment account information to the vehicle 53 based on the Uu interface.

In addition, for another example, the vehicle 53 may send an account binding request to the payment organization terminal 51 based on the Uu interface, where the request may include a terminal identifier (for example, a vehicle identifier) used as the payment account information. After receiving the request, the payment organization terminal 51 may determine, based on the terminal identifier, the payment account corresponding to the vehicle 53. Then, the payment organization 51 may bind the terminal identifier to the payment account. In this way, the vehicle 53 may provide the terminal identifier (which may also be referred to as the payment account information) for the service providing terminal 52.

The service providing terminal 52 may determine, after receiving the service request, the bill information of accepting the first service by the vehicle 53, and send, in step S5030, the bill information to the vehicle 53 based on the PC5 interface.

In step S5040, the service providing terminal 52 may send, to the payment organization terminal based on the Uu interface, a payment request of paying for the first service by the vehicle 53, where the payment request includes the bill information and the payment account information of the vehicle 53.

After receiving the payment request, the payment organization terminal 51 determines payment information of this payment. The payment information includes payment account information of the service providing terminal 52, the payment account information of the vehicle 53, and the bill information of the first service. For example, the payment organization terminal 51 may generate/determine, based on the identification information of the service providing terminal 52, the payment account information corresponding to the service providing terminal 52.

The payment organization terminal 51 completes a payment operation by using the payment information, that is, a payment account of the service providing terminal 52 accepts payment from the payment account of the vehicle 52.

After the payment is completed, in step S5050, the payment organization terminal 51 sends, to the service providing terminal 52 based on the Uu interface, payment completion information indicating that the first service has been paid for.

In step S5060, the payment organization terminal 51 may further send the payment completion information to the service providing terminal 52 based on the Uu interface.

In addition, in an optional implementation, the service providing terminal 52 feeds back, to the vehicle 53 based on the PC5 interface, completion of payment made by the vehicle 53, and provides the first service for the vehicle 53.

According to the operations in FIG. 4 and FIG. 5, after the service providing terminal 41 or 51 receives the service request of the vehicle 43 or 53, the vehicle 43 or 53 or the service providing terminal 42 or 52 may be selected, based on a setting, to apply to the payment organization terminal for the payment account information, and obtain, from the payment organization terminal, the payment account information corresponding to the vehicle 43 or 53 or the service providing terminal 42 or 52. In implementation, after the vehicle 43 or 53 obtains the payment account information, the service providing terminal 42 or 52 may initiate the payment request to the payment organization terminal after receiving the payment account information of the vehicle 43 or 53, and the payment terminal organization performs the payment operation. In another implementation, after the service providing terminal 42 or 52 obtains the payment account information, the vehicle 43 or 53 may initiate the payment request to the payment organization terminal after receiving the payment account information of the service providing terminal 42 or 52 and the bill information, and the payment terminal organization performs the payment operation.

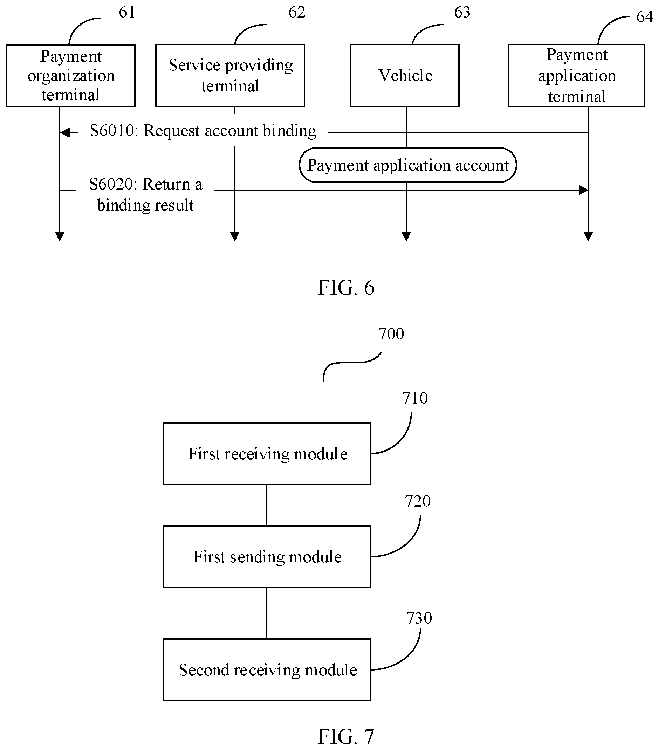

In implementation, to improve payment convenience, the vehicle 43 or 53 in the vehicle payment system may use operations shown in FIG. 6. The vehicle payment system may include a payment organization terminal 61, a service providing terminal 62, and a vehicle 63.

In step S6010, the vehicle 63 may send an account binding request to the payment organization terminal based on a Uu interface, where the request may include a vehicle identifier (that is, a terminal identifier) of the vehicle 63, and the vehicle identifier is not limited to a vehicle identification number (Vehicle Identification Number, VIN) and is equivalent to an "ID card" of the vehicle.

After receiving the request, the payment organization terminal 61 may allocate a payment account to the vehicle 63 based on the Uu interface, and store the account correspondingly to the vehicle identifier of the vehicle 63. Then, the payment organization terminal 81 may send the payment account to the vehicle 83. For example, each time the vehicle 63 sends a payment request based on a PC5 interface, the vehicle 63 may send only the payment account to the service providing terminal, or send the vehicle identifier corresponding to the payment account to the service providing terminal.

In addition, the vehicle payment system may further include a payment application terminal 34, and the payment application terminal 34 may refer to a terminal device (for example, a mobile phone) with a payment application. In implementation, a payment application account of the payment application terminal 34 may be bound to the vehicle identifier of the vehicle. In other words, each payment application account may be used to pay a fee caused by the vehicle.

Therefore, the payment application terminal 34 may send an account binding request to the payment organization terminal 61, where the request includes a payment account of a payment application, and is sent together with the vehicle identifier to the payment organization terminal 61, and the payment organization terminal 61 may bind the payment account to the vehicle identifier. For security, the payment organization terminal 61 may send random verification information (for example, a random verification code) to the vehicle. Subsequently, the vehicle 63 may perform an operation.

It can be understood that, to implement the foregoing functions, the foregoing terminals include corresponding hardware structures and/or software modules for performing the functions. A person skilled in the art should be easily aware that, in combination with the units and algorithm steps in the examples described in the embodiments disclosed in this specification, the embodiments of this application can be implemented by using hardware or a combination of hardware and computer software. Whether a function is performed by hardware or by driving hardware by computer software depends on particular applications and design constraints of the technical solutions. A person skilled in the art may use different methods to implement the described functions for each particular application, but it should not be considered that the implementation goes beyond the scope of the embodiments of this application.

In the embodiments of this application, the foregoing terminal or the like may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software function module. It should be noted that division into the modules in the embodiments of this application is an example, and is merely a logical function division. There may be another division manner during actual implementation.

When each functional module is obtained through division based on each corresponding function, FIG. 7 to FIG. 10 are structural block diagrams of the V2X-based vehicle payment device in the foregoing embodiments.

As shown in FIG. 7, a vehicle payment device 700 may include a first receiving module 710, a first sending module 720, and a second receiving module 730.

The first receiving module 710 is configured to receive, based on a PC5 interface, service information that is broadcast by a service providing terminal, where the service information is related to a service that can be provided by the service providing terminal.

The first sending module 720 is configured to send a service request for a first service to the service providing terminal based on the PC5 interface, where the service request includes payment account information of the service request terminal, and the first service is at least some of services that can be provided by the service providing terminal.

The second receiving module 730 is configured to receive payment completion information from a payment organization terminal based on a Uu interface.

Optionally, the vehicle payment device 700 further includes: a second sending module, configured to send a payment account request to the payment organization based on the Uu interface; and a third receiving module, configured to receive the payment account information from the payment organization terminal based on the Uu interface.

Optionally, the payment account information is a terminal identifier of the service request terminal, and the terminal identifier is bound to a payment account of the service request terminal.

Optionally, the vehicle payment device 700 further includes: a fourth receiving module, configured to receive, from the service providing terminal based on the PC5 interface, bill information of accepting the first service by the service request terminal; and a first determining module, configured to determine, based on the bill information, that the first service meets a preset service limitation condition.

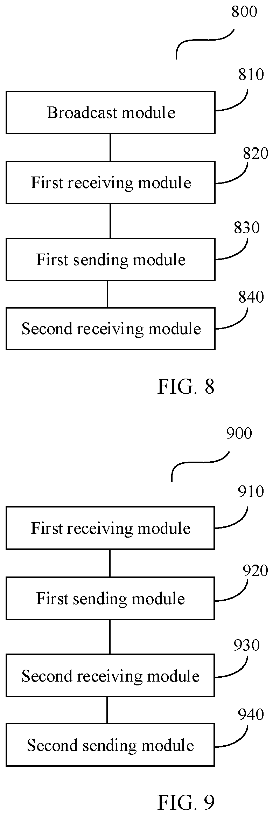

As shown in FIG. 8, a vehicle payment device 800 may include a broadcast module 810, a first receiving module 820, a first sending module 830, and a second receiving module 840.

The broadcast module 810 is configured to broadcast, based on a PC5 interface, service information that can be provided by the service providing terminal, where the service information is related to a service that can be provided by the service providing terminal.

The first receiving module 820 is configured to receive a service request for a first service from a service request terminal based on the PC5 interface, where the service request includes payment account information of the service request terminal, and the first service is at least some of services that can be provided by the service providing terminal.

The first sending module 830 is configured to send, to a payment organization terminal based on a Uu interface, a payment request about paying for the first service by the service request terminal, where the payment request includes bill information of the first service and the payment account information of the service request terminal.

The second receiving module 840 is configured to receive, from the payment organization terminal based on the Uu interface, payment completion information indicating that the service request terminal has paid for the first service.

Optionally, the vehicle payment device 800 further includes a second sending module, configured to feed back, to the service request terminal based on the PC5 interface, completion of payment made by the service request terminal for the first service.

As shown in FIG. 9, a vehicle payment device 900 may include a first receiving module 910, a first sending module 920, a second receiving module 930, and a second sending module 940.

The first receiving module 910 is configured to receive, based on a PC5 interface, service information that is broadcast by a service providing terminal, where the service information is related to a service that can be provided by the service providing terminal.

The first sending module 920 is configured to send a service request for a first service to the service providing terminal based on the PC5 interface, where the first service is at least some of services that can be provided by the service providing terminal.

The second receiving module 930 is configured to receive, from the service providing terminal based on the PC5 interface, payment account information of the service providing terminal and bill information of accepting the first service by the service request terminal.

The second sending module 940 is configured to send a payment request to a payment organization terminal based on a Uu interface, where the payment request includes the payment account information of the service providing terminal and the bill information.

Optionally, the vehicle payment device 900 further includes a third receiving module, configured to receive, from the payment organization terminal based on the Uu interface, payment completion information indicating that the service request terminal has paid for the first service.

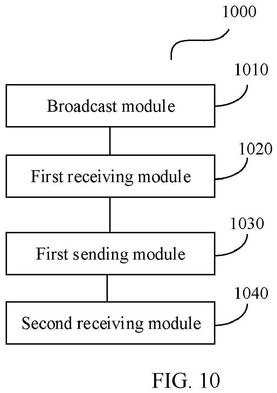

As shown in FIG. 10, a vehicle payment device 1000 may include a broadcast module 1010, a first receiving module 1020, a first sending module 1030, and a second receiving module 1040.

The broadcast module 1010 is configured to broadcast, based on a PC5 interface, service information that can be provided by the service providing terminal, where the service information is related to a service that can be provided by the service providing terminal.

The first receiving module 1020 is configured to receive a service request for a first service from a service request terminal based on the PC5 interface, where the first service is at least some of services that can be provided by the service providing terminal.

The first sending module 1030 is configured to send, to the service request terminal based on the PC5 interface, payment account information of the service providing terminal and information indicating that the service request terminal accepts the first service.

The second receiving module 1040 is configured to receive, from a payment organization terminal based on a Uu interface, payment completion information indicating that the service request terminal has paid for the first service.

Optionally, the vehicle payment device 1000 further includes a second sending module, configured to feed back, to the service request terminal based on the PC5 interface, completion of payment made by the service request terminal for the first service.

A computer-readable storage medium may be a tangible device that can retain and store instructions used by an instruction execution device. The computer-readable storage medium may be, for example but not limited to, an electronic storage device, a magnetic storage device, an optical storage device, an electromagnetic storage device, a semiconductor storage device, or any suitable combination thereof. More specific examples (a non-exhaustive list) of the computer-readable storage medium include: a portable computer disk, a hard disk, a random access memory (Random Access Memory, RAM), a read-only memory (Read-Only Memory, ROM), an erasable programmable read-only memory (Electrically Programmable Read-Only-Memory, EPROM or flash memory), a static random access memory (Static Random Access Memory, SRAM), a portable compact disc read-only memory (Compact Disc Read-Only Memory, CD-ROM), a digital versatile disc (Digital Video Disc, DVD), a memory stick, a floppy disk, a mechanical coding device, for example, a punched card or an in-groove protrusion structure that stores instructions, and any suitable combination thereof.

The computer-readable program instructions or code described herein may be downloaded from the computer-readable storage medium to each computing/processing device, or downloaded to an external computer or an external storage device through a network such as the Internet, a local area network, a wide area network, and/or a wireless network. The network may include a copper transmission cable, optical fiber transmission, wireless transmission, a router, a firewall, a switch, a gateway computer, and/or an edge server. A network adapter card or network interface in each computing/processing device receives the computer-readable program instructions from the network, and forwards the computer-readable program instructions for storage in a computer-readable storage medium in the computing/processing device.

The computer program instructions used for performing the operations in this application may be assembly instructions, instruction set architecture (Instruction Set Architecture, ISA) instructions, machine instructions, machine-related instructions, microcode, firmware instructions, status setting data, or source code or object code written by using any combination of one or more programming languages. The programming languages include an object-oriented programming language such as Smalltalk or C++, and a conventional procedural programming language such as a "C" language or a similar programming language. The computer-readable program instructions may be executed entirely on a user computer, executed partly on a user computer, executed as an independent software package, executed partly on a user computer and partly on a remote computer, or executed entirely on a remote computer or a server. When a remote computer is used, the remote computer may be connected to a user computer through any type of network, including a local area network (Local Area Network, LAN) or a wide area network (Wide Area Network, WAN), or may be connected to an external computer (for example, connected to the external computer through the Internet by using an Internet service provider). In some embodiments, an electronic circuit, for example, a programmable logic circuit, a field-programmable gate array (Field-Programmable Gate Array, FPGA), or a programmable logic array (Programmable Logic Array, PLA), is customized by using status information of the computer-readable program instructions. The electronic circuit may execute the computer-readable program instructions, so as to implement various aspects of this application.

Herein, the various aspects of this application are described with reference to the flowcharts and/or block diagrams of the method, the apparatus (system), and the computer program product according to the embodiments of this application. It should be understood that each block in the flowcharts and/or block diagrams and a combination of blocks in the flowcharts and/or block diagrams may be implemented by using the computer-readable program instructions.

These computer-readable program instructions may be provided for a processor of a general-purpose computer, a special-purpose computer, or another programmable data processing apparatus to produce a machine, so that when these instructions are executed by the processor of the computer or the another programmable data processing apparatus, an apparatus for implementing a function/an action specified in one or more blocks in the flowcharts and/or block diagrams is generated. Alternatively, these computer-readable program instructions may be stored in a computer-readable storage medium. These instructions enable a computer, a programmable data processing apparatus, and/or another device to work in a specific manner. Therefore, the computer-readable medium storing the instructions includes an artifact that includes instructions for implementing various aspects of a function/an action specified in one or more blocks in the flowcharts and/or block diagrams.

Alternatively, the computer-readable program instructions may be loaded to a computer, another programmable data processing apparatus, or another device, so that a series of operation steps are performed on the computer, the another programmable data processing apparatus, or the another device, to generate a computer-implemented process, so that the instructions executed on the computer, the another programmable data processing apparatus, or the another device implement a function/an action specified in one or more blocks in the flowcharts and/or block diagrams.

The flowcharts and block diagrams in the accompanying drawings show system architectures, functions, and operations of possible implementations of apparatuses, systems, methods, and computer program products according to a plurality of embodiments of this application. In this regard, each block in the flowcharts or block diagrams may represent a module, a program segment, or a part of the instructions, and the module, the program segment, or the part of the instructions includes one or more executable instructions used for implementing a specified logical function. In some alternative implementations, functions marked in blocks may alternatively occur in a sequence different from that marked in the accompanying drawings. For example, actually, two consecutive blocks may be executed basically in parallel, or sometimes may be executed in a reverse order. This depends on a related function.

It should also be noted that each block in the block diagrams and/or flowcharts, and a combination of blocks in the block diagrams and/or flowcharts may be implemented by hardware (for example, a circuit or an application-specific integrated circuit (Application-Specific Integrated Circuit, ASIC)) that performs a corresponding function or action, or may be implemented by a combination of hardware and software, for example, firmware.

Although this application is described herein with reference to the embodiments, in a process of implementing this application that claims protection, a person skilled in the art may understand and implement other variations of the disclosed embodiments by viewing the accompanying drawings, the disclosed content, and the appended claims. In the claims, the word "comprising" (comprising) does not exclude another component or step, and "a" or "one" does not exclude a case of a plurality. A single processor or another unit may implement several functions enumerated in the claims. Some measures are recorded in dependent claims that are different from each other, but this does not mean that these measures cannot be combined to produce a good effect.

The foregoing has described the embodiments of this application. The foregoing descriptions are examples and are not exhaustive, and this application is not limited to the disclosed embodiments. Many modifications and variations are apparent to a person of ordinary skill in the art without departing from the scope of the described embodiments. Selection of the terms used in this specification is intended to best explain principles of the embodiments, actual application of the embodiments, or improvements on technologies in the market, or to enable another person of ordinary skill in the art to understand the embodiments disclosed in this specification.

## Claims

1. A V2X-based vehicle payment method, wherein the method is performed by a service request terminal, and comprises:
receiving, based on a PC5 interface, service information that is broadcast by a service providing terminal, wherein the service information is related to a service that can be provided by the service providing terminal;
sending a service request for a first service to the service providing terminal based on the PC5 interface, wherein the service request comprises payment account information of the service request terminal, and the first service is at least some of services that can be provided by the service providing terminal; and
receiving payment completion information from a payment organization terminal based on a Uu interface.

2. The method according to claim 1, wherein before the sending a service request for a first service, the method further comprises:
sending a payment account request to the payment organization based on the Uu interface; and
receiving the payment account information from the payment organization terminal based on the Uu interface.

3. The method according to claim 1, wherein the payment account information is a terminal identifier of the service request terminal, and the terminal identifier is bound to a payment account of the service request terminal.

4. The method according to any one of claims 1 to 3, wherein before the sending a service request for a first service, the method further comprises:
receiving, from the service providing terminal based on the PC5 interface, bill information of accepting the first service by the service request terminal; and
determining, based on the bill information, that the first service meets a preset service limitation condition.

5. A V2X-based vehicle payment method, wherein the method is performed by a service providing terminal, and comprises:
broadcasting service information based on a PC5 interface, wherein the service information is related to a service that can be provided by the service providing terminal;
receiving a service request for a first service from a service request terminal based on the PC5 interface, wherein the service request comprises payment account information of the service request terminal, and the first service is at least some of services that can be provided by the service providing terminal;
sending, to a payment organization terminal based on a Uu interface, a payment request about paying for the first service by the service request terminal, wherein the payment request comprises bill information of accepting the first service by the service request terminal and the payment account information of the service request terminal; and
receiving, from the payment organization terminal based on the Uu interface, payment completion information indicating that the service request terminal has paid for the first service.

6. The method according to claim 5, wherein after the receiving payment completion information, the method further comprises:
feeding back, to the service request terminal based on the PC5 interface, completion of payment made by the service request terminal for the first service.

7. A V2X-based vehicle payment method, wherein the method is performed by a service request terminal, and comprises:
receiving, based on a PC5 interface, service information that is broadcast by a service providing terminal, wherein the service information is related to a service that can be provided by the service providing terminal;
sending a service request for a first service to the service providing terminal based on the PC5 interface, wherein the first service is at least some of services that can be provided by the service providing terminal;
receiving, from the service providing terminal based on the PC5 interface, payment account information of the service providing terminal and bill information of accepting the first service by the service request terminal; and
sending a payment request to a payment organization terminal based on a Uu interface, wherein the payment request comprises the payment account information of the service providing terminal and the bill information.

8. The method according to claim 7, wherein after the sending a payment request, the method further comprises:
receiving, from the payment organization terminal based on the Uu interface, payment completion information indicating that the service request terminal has paid for the first service.

9. A V2X-based vehicle payment method, wherein the method is performed by a service providing terminal, and comprises:
broadcasting service information based on a PC5 interface, wherein the service information is related to a service that can be provided by the service providing terminal;
receiving a service request for a first service from a service request terminal based on the PC5 interface, wherein the first service is at least some of services that can be provided by the service providing terminal;
sending, to the service request terminal based on the PC5 interface, payment account information of the service providing terminal and bill information of accepting the first service by the service request terminal; and
receiving, from a payment organization terminal based on a Uu interface, payment completion information indicating that the service request terminal has paid for the first service.

10. The method according to claim 9, wherein after the receiving payment completion information, the method further comprises:
feeding back, to the service request terminal based on the PC5 interface, completion of payment made by the service request terminal for the first service.

11. A V2X-based vehicle payment device, comprising:
a first receiving module, configured to receive, based on a PC5 interface, service information that is broadcast by a service providing terminal, wherein the service information is related to a service that can be provided by the service providing terminal;
a first sending module, configured to send a service request for a first service to the service providing terminal based on the PC5 interface, wherein the service request comprises payment account information of the service request terminal, and the first service is at least some of services that can be provided by the service providing terminal; and
a second receiving module, configured to receive payment completion information from a payment organization terminal based on a Uu interface.

12. The device according to claim 11, wherein the device further comprises:
a second sending module, configured to send a payment account request to the payment organization based on the Uu interface; and
a third receiving module, configured to receive the payment account information from the payment organization terminal based on the Uu interface.

13. The device according to claim 11, wherein the payment account information is a terminal identifier of the service request terminal, and the terminal identifier is bound to a payment account of the service request terminal.

14. The device according to any one of claims 11 to 13, wherein the device further comprises:
a fourth receiving module, configured to receive, from the service providing terminal based on the PC5 interface, bill information of accepting the first service by the service request terminal; and
a first determining module, configured to determine, based on the bill information, that the first service meets a preset service limitation condition.

15. A V2X-based vehicle payment device, comprising:
a broadcast module, configured to broadcast service information based on a PC5 interface, wherein the service information is related to a service that can be provided by the service providing terminal;
a first receiving module, configured to receive a service request for a first service from a service request terminal based on the PC5 interface, wherein the service request comprises payment account information of the service request terminal, and the first service is at least some of services that can be provided by the service providing terminal;
a first sending module, configured to send, to a payment organization terminal based on a Uu interface, a payment request about paying for the first service by the service request terminal, wherein the payment request comprises bill information of the first service and the payment account information of the service request terminal; and
a second receiving module, configured to receive, from the payment organization terminal based on the Uu interface, payment completion information indicating that the service request terminal has paid for the first service.

16. The device according to claim 15, wherein the device further comprises:
a second sending module, configured to feed back, to the service request terminal based on the PC5 interface, completion of payment made by the service request terminal for the first service.

17. A V2X-based vehicle payment device, comprising:
a first receiving module, configured to receive, based on a PC5 interface, service information that is broadcast by a service providing terminal, wherein the service information is related to a service that can be provided by the service providing terminal;
a first sending module, configured to send a service request for a first service to the service providing terminal based on the PC5 interface, wherein the first service is at least some of services that can be provided by the service providing terminal;
a second receiving module, configured to receive, from the service providing terminal based on the PC5 interface, payment account information of the service providing terminal and bill information of accepting the first service by the service request terminal; and
a second sending module, configured to send a payment request to a payment organization terminal based on a Uu interface, wherein the payment request comprises the payment account information of the service providing terminal and the bill information.

18. The device according to claim 17, wherein the device further comprises:
a third receiving module, configured to receive, from the payment organization terminal based on the Uu interface, payment completion information indicating that the service request terminal has paid for the first service.

19. A V2X-based vehicle payment device, comprising:
a broadcast module, configured to broadcast service information based on a PC5 interface, wherein the service information is related to a service that can be provided by the service providing terminal;
a first receiving module, configured to receive a service request for a first service from a service request terminal based on the PC5 interface, wherein the first service is at least some of services that can be provided by the service providing terminal;
a first sending module, configured to send, to the service request terminal based on the PC5 interface, payment account information of the service providing terminal and information indicating that the service request terminal accepts the first service; and
a second receiving module, configured to receive, from a payment organization terminal based on a Uu interface, payment completion information indicating that the service request terminal has paid for the first service.

20. The device according to claim 19, wherein the device further comprises:
a second sending module, configured to feed back, to the service request terminal based on the PC5 interface, completion of payment made by the service request terminal for the first service.

21. An electronic terminal, comprising:
a processor; and
a memory, configured to store processor-executable instructions, wherein
the processor is configured to implement the method according to any one of claims 1 to 4, the method according to claim 5 or 6, the method according to claim 7 or 8, or the method according to claim 9 or 10 when executing the instructions.

22. A computer-readable storage medium, wherein the computer-readable storage medium stores computer program instructions, and when the computer program instructions are executed by a processor, the method according to any one of claims 1 to 4, the method according to claim 5 or 6, the method according to claim 7 or 8, or the method according to claim 9 or 10 is implemented.

23. A computer program product, comprising instructions, wherein when the instructions are run on a computer, the computer is enabled to perform the method according to any one of claims 1 to 4, the method according to claim 5 or 6, the method according to claim 7 or 8, or the method according to claim 9 or 10.
